# EUROPEAN PATENT APPLICATION

(11) **EP 2 083 376 A1**
(43) Date of publication of application: **29.07.2009**
(21) Application number: 06797790.0
(22) Date of filing: 11.09.2006
(51) Int. Cl.: G06K 17/00

(54) **COUNTERFEIT CARD DETECTING SYSTEM, AUTHENTICATION JUDGMENT INFORMATION WRITING DEVICE, AND COUNTERFEIT CARD DETECTING DEVICE**

(71) Applicant: Future Technology Institute Corporation, Tokyo 151-0051 (JP); Beppu, Hiromi, Tokyo 135-0015 (JP)
(72) Inventor: SUGIYAMA, Osamu, Saitama 354-0018 (JP)
(74) Representative: Sparing Röhl Henseler Patentanwälte European Patent Attorneys
(86) International application number: PCT/JP2006/317964
(87) International publication number: WO 2008/032351

(57) **Abstract**

A forged card discrimination system, an authenticity determination information writing device and a forged card discrimination device which can directly utilize an existing cash card or a credit card of a magnetic recording type and is preferable to prevent abuse of a forgery card with low cost are provided. A forged card discrimination system 1 is configured to include a magnetic card read section 1a, magnetic card determination section 1b, and an authentic signal (analog signal) writing section 1c, reads all track data on the magnetic card as analog signal, and analyzes the waveform of the analog signal so as to determine authenticity of the magnetic card, in addition, when target magnetic card is an authentic card, performs writing analog signal data based on the original algorithm in a front part of writing position of STX signal and a rear part of writing position of ETX signal.

## Description

### Technical Field

The present invention is related to a forged card discrimination system, an authenticity determination information writing device, and a forged card discrimination device to discriminate forgery of magnetic cards such as a credit card and a cash card.

### Background Art

In recent years, the damage by skimming of a cash card increases. As a trick of a crime, there is a spy camera, a hacking that abuses a network, or the like, and unauthorized use of a forged cash card by these occurs frequently. However, it is the present situations that an effective measures to prevent these cannot be found.
Recently, a chip card (IC card) or a biometrics authentication system begins to be adopted to prevent the damage with a forged card.
In addition, the amount of damage with a forged credit card from 2003 to 2005 is estimated to be around 40-billion-yen a year. Since the credit industry says user protection, if a user notices the damage, it is exempted by a proposal, but many users suffer the damage without noticing it. The credit company does not suffer directly the damage, because it has collected the use charges in which an amount of damage assumed beforehand is added as an official fee from a store and a user.

### Disclosure of the Invention

However, the above chip card and biometrics authentication system are not complete for precaution, and need a great investment because an introduction cost is expensive.
In addition, like the above credit company, a user must bear an unnecessary usage fee in a way to take the official fee that the amount of damage is assumed. Further, in view of an aspect of customer security, such as raises of the usage fee, a credit company also suffers a great loss.
Thus, the present invention is adapted for attention to such a unsolved problem that a prior art has, and has a purpose to provide a forged card discrimination system, an authenticity determination information writing device, and a forged card discrimination device which can directly utilize an existing cash card or a credit card of a magnetic record type and is preferable to prevent abuse of a forgery card with low cost.

In order to attain the above purpose, a forged card discrimination system of aspect 1 according to the present invention is,
a forged card discrimination system which discriminates whether or not a magnetic card is a forged card, the magnetic card having a magnetic recording medium in which an approval signal data for approving a card is written in a predetermined record position, the forged card discrimination system comprising:
an encryption determination means which determines whether or not the magnetic card is encrypted based on encryption determination data;
an authentic signal writing determination means which determines whether or not an authentic signal data is written in a region except record region of the approval signal data in the magnetic recording medium of the magnetic card, when the encryption determination means determines that the magnetic card is encrypted;
an authentic signal writing means which encrypts the approval signal data when the encryption determination means determined that the magnetic card was not encrypted, and writes the authentic signal data based on the approved signal data encrypted in a region except record region of the approval signal data of the magnetic recording medium; and
a forgery discrimination means which discriminates whether or not the magnetic card is a forged card based on the determination result of the authentic signal writing determination means.

With such a configuration, it is possible to determine whether or not the magnetic card is encrypted based on encryption determination data, by an encryption determination means, to determine whether or not an authentic signal data is written in a region except record region of the approval signal data in the magnetic recording medium of the magnetic card, when the encryption determination means determines that the magnetic card is encrypted, by an authentic signal writing determination means, and to encrypt the approval signal data when the encryption determination means determined that the magnetic card was not encrypted, and to write the authentic signal data based on the approved signal data encrypted in a region except record region of the approval signal data of the magnetic recording medium, by an authentic signal writing means.

In addition, it is possible to determine whether or not the magnetic card is a forged card based on the determination result of the authentic signal writing determination means, by a forgery discrimination means.
That is, it is possible to write authentic signal data for discriminate whether or not these card are forged cards in a region except record region of signal data for approving card recorded in the magnetic recording medium (magnetic stripe) of the magnetic card such as magnetic record type and credit card which are generally used (existing).

In addition, it is possible to discriminate whether or not the magnetic card is a forged card, by determining the writing presence of the authentic signal data for the magnetic card having an approval signal data in which the authentic signal data is written.
Further, the invention according to aspect 2 is the forged card discrimination system according to aspect 1,
wherein the authentic signal writing means writes the authentic signal data in at least one of a front part of the record position of a start signal data indicating a start position of the approval signal data and a rear part of the record position of the end signal data indicating an end position of the approval signal data, in a region except the record region of the approval signal data of the magnetic recording medium.

With such a configuration, for example, it is possible to write authentic signal data in front and rear parts of STX signal and ETX signal (in a region except record region of JIS II data of magnetic stripe) indicating start and end of approval signal data (JIS II data) in cash card
A card forger steals approval signal data by making a device for skimming recognize the above STX signal and ETX signal, but with the above configuration, it is possible to prevent authentic signal data from being stolen, because authentic data is written in a region except record region of JIS II data.

In order to attain above purpose, an authenticity determination information writing device according to aspect 3 is,
an authenticity determination information writing device which writes an authentic signal data for determining authenticity of the magnetic card in the magnetic recording medium of the magnetic card having a magnetic recording medium in which an approval signal data for approving a card is written in a predetermined record position, the authenticity determination information writing device comprising:
an encryption determination means which determines whether or not the magnetic card is encrypted based on encryption determination data;
an authentic signal writing determination means which determines whether or not an authentic signal data is written in a region except record region of the approval signal data in the magnetic recording medium of the magnetic card, when the encryption determination means determines that the magnetic card is encrypted; and
an authentic signal writing means which encrypts the approval signal data when the encryption determination means determined that the magnetic card was not encrypted, and writes the authentic signal data based on the approved signal data encrypted in a region except record region of the approval signal data of the magnetic recording medium.

With such a configuration, it is possible to determine whether or not the magnetic card is encrypted based on encryption determination data by an encryption determination means, and to determine whether or not an authentic signal data is written in a region except record region of the approval signal data in the magnetic recording medium of the magnetic card, when the encryption determination means determines that the magnetic card is encrypted by an authentic signal writing determination means.

That is, like the forged card determination system according to aspect 1, it is possible to write authentic signal data for discriminate whether or not these card are forged cards in a region except record region of signal data for approving card recorded in the magnetic recording medium (magnetic stripe) of the magnetic card such as magnetic record type and credit card which are generally used (existing).
Further, the invention according to aspect 4 is the authenticity determination information writing device according to aspect 3,
wherein the authentic signal writing means writes the authentic signal data in at least one of a front part of the record position of a start signal data indicationg a start position of the approval signal data and a rear part of the record position of the end signal data indicating an end position of the approval signal data, in a region except the record region of the approval signal data of the magnetic recording medium.

With such a configuration, for example, it is possible to write authentic signal data in front and rear parts of STX signal and ETX signal (in a region except record region of JIS II data of magnetic stripe) indicating start and end of approval signal data (JIS II data) in cash card
A card forger steals approval signal data by making a device for skimming recognize the above STX signal and ETX signal, but with the above configuration, it is possible to prevent authentic signal data from being stolen, because authentic data is written in a region except record region of JIS II data.

In order to attain above purpose, a forged card discrimination device according to aspect 5 is,
a forged card discrimination device which discriminates whether or not a magnetic card is a forged card, the magnetic card having a magnetic recording medium in which an approval signal data for approving a card is written in a predetermined record position, the forged card discrimination device comprising:
an encryption determination means which determines whether or not the magnetic card is encrypted based on encryption determination data;
an authentic signal writing determination means which determines whether or not an authentic signal data is written in a region except record region of the approval signal data in the magnetic recording medium of the magnetic card, when the encryption determination means determines that the magnetic card is encrypted; and
a forgery discrimination means which discriminates whether or not the magnetic card is a forged card based on the determination result of the authentic signal writing determination means.

With such a configuration, it is possible to determine whether or not the magnetic card is encrypted based on encryption determination data, by an encryption determination means, to determine whether or not an authentic signal data is written in a region except record region of the approval signal data in the magnetic recording medium of the magnetic card, when the encryption determination means determines that the magnetic card is encrypted, by an authentic signal writing determination means, and to discriminate whether or not the magnetic card is a forged card based on the determination result of the authentic signal writing determination means, by a forgery discrimination means.

That is, it is possible to determine whether or not a target magnetic card is a forged card based on authenticity of the approval signal data, and writing presence of authentic signal data written in a region except the record region of the approval signal data, by the forged card discrimination system according to aspect 1 or 2, or the authenticity determination information writing device according to aspect 3 or 4.
Further, the invention according to aspect 6 is the forged card discrimination device according to aspect 5,
wherein the authentic signal writing determination means determines whether or not an authentic signal data is written in at least one of a front part of the record position of a start signal data indication a start position of the approval signal data or a rear part of the record position of the end signal data indicating a end position of the approval signal data, in a region except the record region of the approval signal data of the magnetic recording medium.

With such a configuration, it is possible to determine whether or not an authentic signal data is written in at least one of a front part of the record position of a start signal data indication a start position of the approval signal data or a rear part of the record position of the end signal data indicating a end position of the approval signal data, in a region except the record region of the approval signal data of the magnetic recording medium by the authentic signal writing determination means.
In order to attain above purpose, a forged card discrimination system according to aspect 7 is,
a forged card discrimination system which discriminates whether or not a magnetic card is a forged card, the magnetic card having a magnetic recording medium in which an approval signal data for approving a card is written in a predetermined record position, the forged card discrimination system comprising:
an encryption determination means which determines whether or not the magnetic card is encrypted based on encryption determination data;
an authentic signal writing determination means which determines whether or not an authentic signal data for determining authenticity of the magnetic card is written in the magnetic recording medium of the magnetic card, when the encryption determination means determines that the magnetic card is encrypted;
an authentic signal writing means which encrypts data written in the magnetic recording medium to generate the authentic signal data based on cipher generation data when the encryption determination means determined that the magnetic card was not encrypted, and writes generated authentic signal data in the magnetic recording medium; and
a forgery discrimination means which discriminates whether or not the magnetic card is a forged card based on the determination result of the authentic signal writing determination means.

With such a configuration, it is possible to determine whether or not the magnetic card is encrypted based on encryption determination data by an encryption determination means, to determine whether or not an authentic signal data for determining authenticity of the magnetic card is written in the magnetic recording medium of the magnetic card, when the encryption determination means determines that the magnetic card is encrypted by an authentic signal writing determination means, to encrypt data written in the magnetic recording medium to generate the authentic signal data based on cipher generation data when the encryption determination means determined that the magnetic card was not encrypted, and to write generated authentic signal data in the magnetic recording medium by an authentic signal writing means.

In addition, it is possible to discriminate whether or not the magnetic card is a forged card based on the determination result of the authentic signal writing determination means by a forgery discrimination means.
That is, it is possible to confirm whether or not the magnetic card such as a cash card and a credit card of magnetic record type which are generally used (existing) is forged by presence of encryption determination data such as public key data set for every magnetic card in the manner of being held in, for example, information center such as a bank or being written in a magnetic recording medium (magnetic stripe).

In addition, it is possible to write authentic signal data for determining authenticity of the magnetic card in the magnetic recording medium (magnetic stripe) when it was determined that it was not encrypted and to determine whether or not authentic signal data is written in the magnetic recording medium when it was determined that it was encrypted.
Thus it is possible to discriminate whether the magnetic card is a forged card by determining encryption status and writing presence of the authentic signal data.

Further, the invention according to aspect 8 is the forged card discrimination system according to aspect 7, further comprising:
an encryption synchronizing signal writing means which encrypts a synchronizing signal data written in the magnetic recording medium based on the cipher generation data and writes encrypted synchronizing signal data in the magnetic recording medium; and
an encryption synchronizing signal writing determination means which determines whether or not the encrypted synchronizing signal data is written in the magnetic recording medium based on the cipher generation data, when the authentic signal writing determination means determined that the authentic signal data was written in,
the forgery discrimination means discriminates whether or not the magnetic card is a forged card based on determination result from the authentic signal writing determination means and determination result from the encryption synchronizing signal writing determination means.

With such a configuration, it is possible to encrypt a synchronizing signal data written in the magnetic recording medium based on the cipher generation data and to write encrypted synchronizing signal data in the magnetic recording medium by an encryption synchronizing signal writing means, to determine whether or not the encrypted synchronizing signal data is written in the magnetic recording medium based on the cipher generation data, when the authentic signal writing determination means determined that the authentic signal data was written by an encryption synchronizing signal writing determination means.

In addition, it is possible to discriminate whether or not the magnetic card is a forged card based on determination result from the authentic signal writing determination means and determination result from the encryption synchronizing signal writing determination means by the forgery discrimination means.
Thus it is possible to encrypt synchronizing signal for reading out various data written in the magnetic recording medium (magnetic stripe) to write (rewrite) it in the magnetic recording medium, and to determine writing presence of authentic signal data and to determine writing presence of synchronizing signal data after encryption, to the magnetic card, such as a cash card and credit card, in which authentic signal data is written.
Therefore it is possible to discriminate more surely whether or not the magnetic card is a forged card.

In addition, , since synchronizing signal is a timing signal for reading out information written in the magnetic card, it cannot reach an idea to convert it to synchronizing signal digital data for authenticity determination of the magnetic card. Therefore it brings about more effects in a point of making card forger not recognize encrypted part to encrypt this analog waveforms of synchronizing signal, for example, in the state of holding a function as synchronizing signal so as to use authenticity determination of the magnetic card. Thus it is possible to further improve the security.

In order to attain above purpose, a forged card discrimination system according to aspect 9 is,
a forged card discrimination system which discriminates whether or not a magnetic card is a forged card, the magnetic card having a magnetic recording medium in which an approval signal data for approving a card is written in a predetermined record position, the forged card discrimination system comprising:
an encryption determination means which determines whether or not the magnetic card is encrypted based on encryption determination data;
an encryption synchronizing signal writing means which encrypts a synchronizing signal data written in the magnetic recording medium based on the cipher generation data and writes encrypted synchronizing signal data in the magnetic recording medium;
an encryption synchronizing signal writing determination means which determines whether or not encrypted synchronizing signal data is written in the magnetic recording medium based on the cipher generation data when the encryption determination means determined that the magnetic card was encrypted; and
a forgery discrimination means which discriminates whether or not the magnetic card is a forged card based on determination result from the encryption synchronizing signal writing determination means.

With such a configuration, it is possible to determine whether or not the magnetic card is encrypted based on encryption determination data by an encryption determination means, to encrypt a synchronizing signal data written in the magnetic recording medium based on the cipher generation data and to write encrypted synchronizing signal data in the magnetic recording medium by an encryption synchronizing signal writing means.

In addition, it is possible to determine whether encrypted synchronizing signal data is written in the magnetic recording medium based on the cipher generation data when encryption determination means determined that the magnetic card was encrypted by an encryption synchronizing signal writing determination means, and to discriminate whether or not the magnetic card is a forged card based on determination result from the encryption synchronizing signal writing determination means, by an a forgery discrimination means.
Thus it is possible to encrypt synchronizing signal for reading out various data written in the magnetic recording medium (magnetic stripe) to write (rewrite) it in the magnetic recording medium, and to determine writing presence of authentic signal data and to determine writing presence of synchronizing signal data after encryption, to the magnetic card, such as a cash card and credit card, in which authentic signal data is written.
Therefore it is possible to discriminate more surely whether or not the magnetic card is a forged card.

In addition, since synchronizing signal is a timing signal for reading out information written in the magnetic card, it cannot reach an idea to convert it to synchronizing signal digital data for authenticity determination of the magnetic card. Therefore it brings about more effects in a point of making card forger not recognize encrypted part to encrypt this analog waveforms of synchronizing signal, for example, in the state of holding a function as synchronizing signal so as to use authenticity determination of the magnetic card. Thus it is possible to further improve the security.

Further, the invention according to aspect 10 is the forged card discrimination system according to any one of aspects 7 to 9,
wherein the encryption determination data is a public key data set for every magnetic card, and
the encryption determination means determines that a magnetic card, in which the public key data is set, is encrypted when public key data is set.
With such a configuration, it is possible to determine easily whether or not the magnetic card is encrypted by presence of public key data set for every magnetic card in the manner of being held in, for example, information center such as a bank or being written in a magnetic recording medium (magnetic stripe) of a magnetic card. In addition, for example, by performing periodically (or for every time of utilization of service to which the present invention is applied) change of public key data and change of authentic signal data for cash card and the like, it is possible to further improve the security for utilization of service using this cash card.

Further, the invention according to aspect 11 is the forged card discrimination system according to any one of aspects 7 to 10,
wherein the cipher generation data includes at least one of the approval signal data, the public key data, and the password data.
With such a configuration, it is possible to generate easily authentic signal data since encryption is performed using at least one of the approval signal data, the public key data, and the password data, and it is possible to perform further improved encryption by performing encryption using all these data.

In order to attain above purpose, a forged card discrimination system according to aspect 12 is,
wherein a forged card discrimination system which discriminates whether or not a magnetic card is a forged card, the magnetic card having a magnetic recording medium in which an approval signal data for approving a card is written in a predetermined record position, the forged card discrimination system comprising:
a public key data writing determination means which determines whether or not a public key data is written in the magnetic recording medium of the magnetic card;
a password data acquisition means which acquires a password data;
an authentic signal writing determination means which determines whether or not an authentic signal data for determining authenticity of the magnetic card is written in the magnetic recording medium of the magnetic card, based on written public key data and password data acquired by the password data acquisition means, when the public key data writing determination means determined that the public key data was written;
a public key data writing means which generates public key data and writes generated public key data in the magnetic recording medium when the public key data writing determination means determined that the public key data was not written;
an authentic signal writing means which encrypts data written in the magnetic recording medium to generate the authentic signal data based on public key data generated by the public key data writing means and password data acquired by the password data acquisition means, and writes generated authentic signal data in the magnetic recording medium; and
a forgery discrimination means which discriminates whether or not the magnetic card is a forged card based on the determination result of the authentic signal writing determination means.

With such a configuration, it is possible to determine whether or not a public key data is written in the magnetic recording medium of the magnetic card by a public key data writing determination means, to acquire a password data by a password data acquisition means, and to determine whether or not an authentic signal data for determining authenticity of the magnetic card is written in the magnetic recording medium of the magnetic card, based on written public key data and password data acquired by the password data acquisition means, when the public key data writing determination means determined that the public key data was written by an authentic signal writing determination means.

In addition, it is possible to generate public key data and writes generated public key data in the magnetic recording medium when the public key data writing determination means determined that the public key data was not written by a public key data writing means, and to encrypt data written in the magnetic recording medium to generate the authentic signal data based on public key data generated by the public key data writing means and password data acquired by the password data acquisition means, and writes generated authentic signal data in the magnetic recording medium by an authentic signal writing means.

In addition, it is possible to discriminate whether or not the magnetic card is a forged card based on the determination result of the authentic signal writing determination means by a forgery discrimination means.
That is, it is possible to write public key data for determining authenticity of authentic signal data in the magnetic recording medium (magnetic stripe) of the magnetic card such as magnetic record type and credit card which are generally used (existing) and to write authentic signal data for discriminate whether or not these card are forged cards in the magnetic recording medium based on public key data and password data.

Thus it is possible to discriminate whether or not the magnetic card is a forged card by determining writing presence of authentic signal data based on public key data and password data for the magnetic card such as cash card and credit card in which public key data and password data are written.
Further, the invention according to aspect 13 is the forged card discrimination system according to aspect 12,
wherein the authentic signal writing means encrypts data written in the magnetic recording medium based on the public key data generated by the public key data writing means, the password data acquired by the password data acquisition means, and the approval signal data written in the magnetic recording medium.

With such a configuration, it is possible to perform encryption using approval signal data in addition to public key data and password data. Therefore it is possible to generate authentic signal data having higher security.
Further, the invention according to aspect 14 is the forged card discrimination system according to aspects 12 or 13, further comprising:
an encryption synchronizing signal writing means which encrypts a synchronizing signal data written in the magnetic recording medium based on the public key data generated by the public key data writing means and the password data acquired by the password data acquisition means; and
an encryption synchronizing signal writing determination means which determines whether or not the encrypted synchronizing signal data is written in the magnetic recording medium based on the public key data generated by the public key data writing means and the password data acquired by the password data acquisition means, when the authentic signal writing determination means determined that the authentic signal data was written,
the forgery discrimination means discriminates whether or not the magnetic card is a forged card based on determination result from the authentic signal writing determination means and determination result from the encryption synchronizing signal writing determination means.

With such a configuration, it is possible to encrypt a synchronizing signal data written in the magnetic recording medium based on the public key data generated by the public key data writing means and the password data acquired by the password data acquisition means by the encryption synchronizing signal writing means, and to determine whether or not the encrypted synchronizing signal data is written in the magnetic recording medium based on the public key data generated by the public key data writing means and the password data acquired by the password data acquisition means, when the authentic signal writing determination means determined that the authentic signal data was written by an encryption synchronizing signal writing determination means.

In addition, it is possible to discriminate whether or not the magnetic card is a forged card based on determination result from the authentic signal writing determination means and determination result from the encryption synchronizing signal writing determination means by the forgery discrimination means.
Thus it is possible to encrypt synchronizing signal for reading out various data written in the magnetic recording medium (magnetic stripe) to write (rewrite) it in the magnetic recording medium, and to determine writing presence of authentic signal data and to determine writing presence of synchronizing signal data after encryption, to the magnetic card such as a cash card and credit card in which public key data and authentic signal data are written.
Therefore it is possible to determine more surely whether or not the magnetic card is a forged card.

Further, the invention according to aspect 15 is the forged card discrimination system according to aspect 14,
wherein the encryption synchronizing signal writing means encrypts the synchronizing signal data by changing a width of waveform of the synchronizing signal data written in the magnetic recording medium.
With such a configuration, it is possible to use that credit card or cash card in ATM and the like of the other system which does not apply the present system, even after writing encrypted synchronizing signal in, by changing a width of analog waveform of synchronizing signal within cope in which a function as synchronizing signal can be conducted in the same way as before changing.

Further, the invention according to aspect 16 is the forged card discrimination system according to aspects 14 or 15,
wherein the encryption synchronizing signal writing means encrypts the synchronizing signal data in the magnetic recording medium based on public key data generated by the public key data writing means, the password data acquired by the password acquisition means, and the approval signal data written in the magnetic recording medium,
the encryption synchronizing signal writing determination means determines writing presence of the encrypted synchronizing signal based on the public key data generated by the public key data writing means, the password data acquired by the password acquisition means, and the approval signal data written in the magnetic recording medium.

With such a configuration, it is possible to perform encryption using approval signal data in addition to public key data and password data. Therefore it is possible to perform higher security encryption for synchronizing signal data.
Further, the invention according to aspect 17 is the forged card discrimination system according to any one of aspects 7 to 16,

wherein the authentic signal writing means writes the authentic signal data in at least one of a front part of the record position of a start signal data indicating a start position of the approval signal data and a rear part of the record position of the end signal data indicating an end position of the approval signal data, in a region except the record region of the approval signal data of the magnetic recording medium.
Thus the same working and effect as aspect 2 are provided.

### Brief Description of Drawings

FIG.1 is a block diagram which shows constitution of forged card discrimination system 1 according to the present invention.
FIG.2 is a diagram which shows an example of a writing position of authentic signal data.
FIG. 3 is a flow chart which shows operation process of forged card discrimination system 1.
FIG.4A is a diagram which shows the signal waveforms before and after encryption of data recorded to a magnetic stripe, and FIG.4B is a diagram which shows the signal waveforms before and after encryption of synchronizing signal data.
FIG. 5 is a flow chart which shows operation process of forged card discrimination system 1 in variation.

### Best Mode for Carrying Out the Invention

Hereinafter, embodiments of the present invention will be described with reference to the drawings.

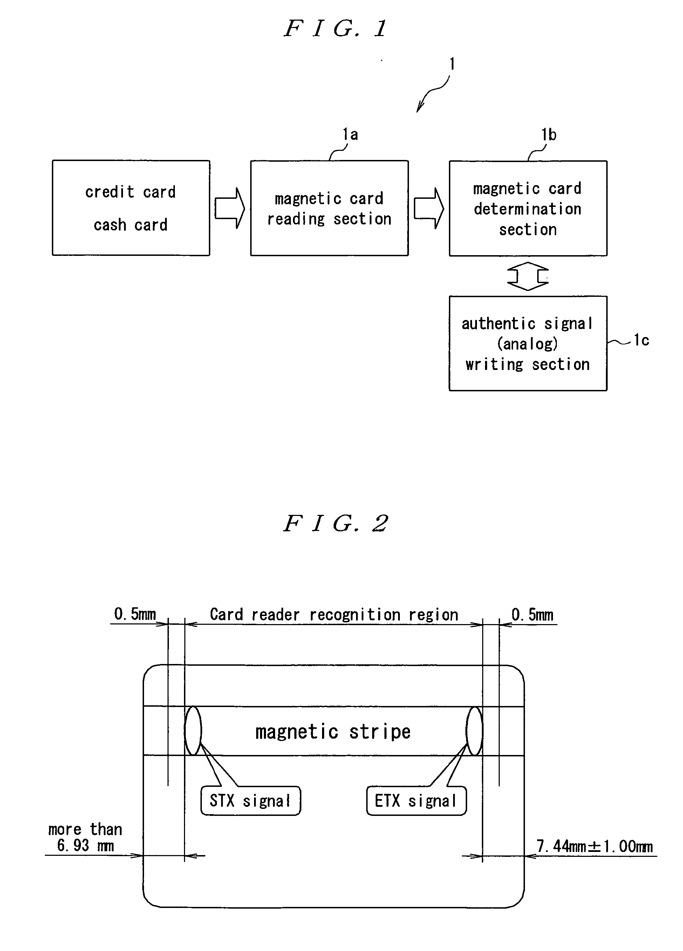

FIG.1-FIG.3 are drawings which show a forged card discrimination system, an authenticity determination information writing device and a forged card discrimination device according to the present invention.
At first, constitution of a forged card discrimination system according to the present invention is explained based on FIG. 1.
FIG. 1 is a block diagram which shows constitution of forged card discrimination system 1 according to the present invention.
This forged card discrimination system 1 reads all track data on a magnetic card as an analog signal, and is a system which determines the authenticity of a magnetic card by analyzing a waveform of the analog signal.
In addition, when a target magnetic card is not encrypted, an analog signal based on original algorithm is written, in a front part of writing position of an STX signal and a rear part of writing position of an ETX signal.
Here, an STX signal is a start signal indicating data start in a card recognition region, and an ETX signal is an end signal indicating the data end in a card recognition region.

Forged card discrimination system 1 is constructed to include a magnetic card reading section 1a, a magnetic card determination section 1b and authentic signal (an analog signal) writing section 1c as shown in FIG. 1.
Hereinafter in the case that a magnetic card is a cash card, operation of the forged card discrimination system 1 is explained.
In addition, in the following discussion, it is assumed that authentication process (identical person confirmation) with the use of a password has been executed.
At first, in magnetic card reading section 1a, JISII data recorded to a magnetic stripe of a cash card are read. Data read in magnetic card reading section 1a is sent to magnetic card determination section 1b.

Next, in magnetic card determination section 1b, it determines whether or not a target cash card is encrypted.
In this embodiment encryption status is determined whether or not specified data (data for encryption determination) is included in the read JISII data.
In other words, it is determined to be encrypted when specified data is included, it is determined not to be encrypted when specified data is not included.
When magnetic card determination section 1b determines that the cash card is not encrypted, authentic signal writing section 1c generates authentic signal data by encryption a positioning data decided based on JIS II data, and writes the generated authentic signal (an analog signal) data in front part of a writing position of STX signal data of the JISII data and in rear part of a writing position of ETX signal data, in a region except writing region of JISII data of the cash card.

In addition, when magnetic card determination section 1b determined that the cash card was encrypted, authentic signal writing section 1c determines whether or not authentic signal (an analog signal) data is written in front part of a writing position of STX signal data and in rear part of a writing position of ETX signal data, and discriminates, when the authentic signal (an analog signal) data is written, that the cash card is a authorized one (authentic card).
On the other hand it discriminates, when an authentic signal data is not written in, that the cash card is a forged card.

In other words, when a target magnetic card is encrypted, writing presence of authentic signal data is determined. In addition , when authentic signal data is written in, the target magnetic card is discriminated as a legitimate one (an authentic card), on the other hand, when authentic signal data is not written in, a target magnetic card is discriminated as a forgery card.
Here, a record form of a track in a magnetic card is a form that data is recorded on a track in F2F (Two-frequency) record form.

Further, referring to FIG. 2, a writing method of authentic signal (an analog signal) data is explained.
Here, FIG.2 is a diagram which shows an example of a writing position of authentic signal data.
In writing process of authentic signal data, authentic signal writing section 1c recognizes a STX signal which exists at the beginning of a card reader recognition region, and, as shown in FIG. 2, writes authentic signal (an analog signal) data at 0.5[mm] front of writing position of a STX signal.
Further, authentic signal writing section 1c recognizes an ETX signal in the tail of a card reader recognition region and, as shown in FIG. 2, and writes authentic signal (an analog signal) data at 0.5[mm] after of writing position of an ETX signal.

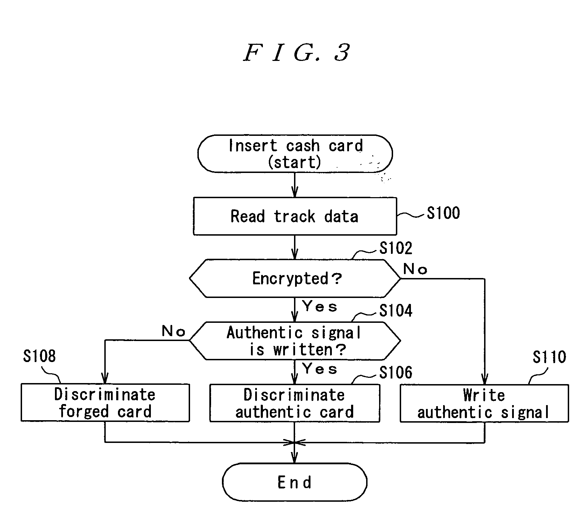

Further, referring to FIG. 3, a flow of operation process of forged card discrimination system 1 is explained.
Here, FIG.3 is a flow chart which shows operation process of forged card discrimination system 1.
When a cash card is inserted into card insertion section (not shown), at first, as shown in FIG. 3, step S100 is shifted to, magnetic card reading section 1a reads JISII data of one track from a magnetic stripe of a cash card, subsequently step S102 is shifted to, and magnetic card determination region 1b determines whether or not a target cash card is encrypted.
In other words, JISII data of one track is analyzed, and when specified data (data for encryption determination) is included (Yes), step S104 is shifted to, and writing presence of authentic signal data is determined.

When step S104 was shifted to, authentic signal writing section 1c determines whether or not authentic signal (an analog signal) data is written in the a region except data recording region of JISII data in a magnetic stripe of a cash card, and when it is determined to be written in (Yes), step S106 is shifted to, and when it is determined not to be written in (No), step S108 is shifted to.
When step S106 was shifted to, magnetic card determination section 1b determines that a target cash card is an authentic card, and the process is finished.

On the other hand, when step S108 was shifted to, magnetic card determination section 1b determines that a target cash card is an authentic card, and the process is finished.
In addition, in step S102, it was determined that a target cash card was not encrypted, and when step S110 was shifted to, data position of a encryption target is determined based on JISII data and the determined position data is encrypted to generate authentic signal data.
Then, the generated authentic signal data is written in the a region except data recording region of JISII data in a magnetic stripe of a cash card, and the process is finished.

In the above embodiment, determination process of encryption status in magnetic card determination section 1b corresponds to encryption determination means as cited in any one of claims 1, 3, and 5, determination process of writing presence of authentic signal data in authentic signal writing section 1c corresponds to authentic signal writing determination means as cited in claim 1 or 5, generation and writing process of authentic signal data in authentic signal writing section 1c corresponds to authentic signal writing means as cited in any one of claims 1-4, and determination process whether or not a target magnetic card is a forgery card in magnetic card determination section 1b corresponds to forgery discrimination means as cited in any one of claims 1-5.

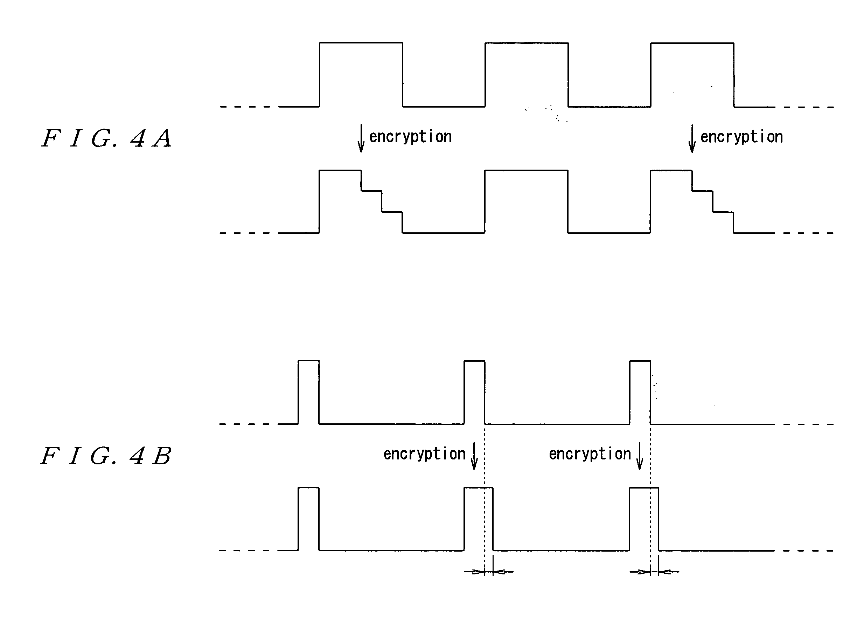

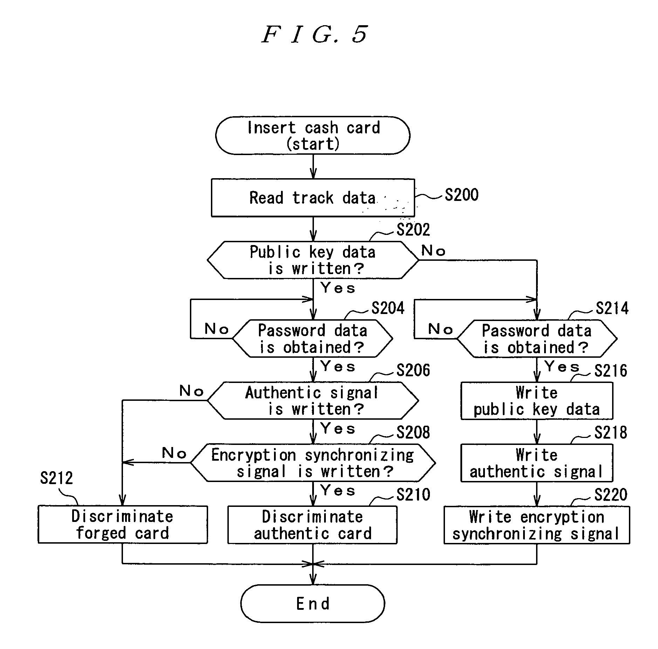

Further, referring to FIGS. 4 and 5, variation of the above embodiment is explained.
Here, FIG.4A is a diagram showing the signal waveforms before and after of encryption that are recorded to a magnetic stripe, and FIG.4B is a diagram showing signal waveforms of before and after of encryption of synchronizing signal data.
In addition, FIG.5 is a flow chart which shows operation process of forged card discrimination system 1 in case of encryption using public key data, password data, and approval signal data.
In this variation, magnetic card determination section 1b in the above embodiment determines writing presence of public key data (for example, it is comprised from a numeric strings of predetermined digits) for a magnetic card inserted into a card insertion section not shown (corresponding to determination process of encryption status in the above embodiment).
Further when public key data is not written in a predetermined record position of magnetic recording medium (a magnetic stripe) in a magnetic card, it is determined that the magnetic card is not encrypted, and authentic signal writing section 1c generates public key data and writes this in a predetermined record position of the magnetic stripe.

Here, since public key data is used in generation of authentic signal data an discrimination of writing position and the like in processes of subsequent stages, when public key data is not written in a predetermined record position, it is predetermined that authentic signal data also is not written in (that is, it is not encrypted).
Therefore authentic signal writing section 1c generates authentic signal (an analog signal) data by encryption an analog signal data recorded in a predetermined record position of the magnetic stripe, based on public key data subsequently generated, password data inputted by a card owner via an input section not shown, and approval signal data written in the magnetic stripe.

Particularly, at first, data signal position to be encrypted is determined by public key data, password data and approval signal data position (these 3 data correspond to data for cipher generating data).
Then as shown in above chart of FIG.4A, signal waveforms of the determined position in data signal waveforms (analog signal waveforms) recorded to a magnetic stripe are encrypted by transforming, as shown in below chart of FIG.4A. The digital data to which the analog signal waveforms before transformation are A/D converted and the digital data to which the analog signal waveforms before transformation are A/D converted become to be the same data contents.
Authentic signal writing section 1c writes authentic signal data generated by this encryption in a record position same as that of a signal before the encryption of a magnetic stripe.
Here, writing position of authentic signal data may be at least one of a front part of writing position of STX signal data and a rear part of writing position of ETX signal data, or the other record position, same as description of the above embodiment.

On the other hand, in this variation, when it is determined that public key data is written (that is, encrypted) in the predetermined record position in authentic signal writing section 1c, it is determined whether or not authentic signal data is written in a record position specified by these data based on the public key data, the password data, and the approval signal data.
Also when it was determined that authentic signal data was not written in, it is discriminated that a target magnetic card is a forged card in magnetic card determination section 1b.

Further, in this variation, synchronizing signal data written in a magnetic stripe of a magnetic card is encrypted based on above the public key data, the password data, and the approval signal data in authentic signal writing section 1c, and synchronizing signal data before encryption is rewritten to the encrypted synchronizing signal data.
Here, synchronizing signal data is, for example, signal waveforms (an analog signal) data of a synchronizing signal when JISII data recorded to a magnetic stripe of a cash card is read out.
For example, synchronizing signal data has a pulse waveform as shown in above chart of FIG.4B, and is written in a magnetic stripe.
And, in this embodiment as shown in below chart of FIG.4B a width of pulse waveform shown in above chart of FIG.4B is changed in a direction to broaden so that synchronizing signal data is encrypted (of course, a width may be changed in a direction to narrow).
This change of width is performed at the level that does not lose an original function as a synchronizing signal.

Then in authentic signal writing section 1c when it is determined that authentic signal data is written in a determination of writing presence of above authentic signal data, it is further determined whether or not above encrypted synchronizing signal data is written in a record position specified by these data based on above public key data, above password data, and above approval signal data.
In this determination when it is determined that encrypted synchronizing signal data was not written in, it is determined that a target magnetic card is a forged card in magnetic card determination section 1b, and when it is determined that encrypted synchronizing signal data was written in, it is determined that a target magnetic card is an authentic card in magnetic card determination section 1b.

Further, referring to FIG. 5, a flow of operation process of forged card discrimination system 1, in a case of encryption using public key data, password data, and approval signal data, is explained.
In addition, like above embodiment, a flow of operation process, when a magnetic card is a cash card, is explained.
When a cash card is inserted into card insertion section (not shown), at first, as shown in FIG. 5, step S200 is shifted to, JISII data of one track from a magnetic stripe of a cash card is read out in magnetic card reading section 1a, and step S202 is shifted to.

In step S202, in magnetic card determination section 1b, it is determined whether or not public key data is written in a predetermined record position in a magnetic stripe of a cash card, and when it was determined that it was written in (Yes), step S204 is shifted to, and when it was determined that it was not written in (No), step S214 is shifted to.
When step S204 was shifted to, in magnetic card determination section 1b, it is determined whether or not password data of the inserted cash card owner was acquired, and when it was determined that it was acquired (Yes), step S206 is shifted to, and when it was not so (No), determination process is repeated till it is acquired.

When step S206 was shifted to, in authentic signal writing section 1c, it is determined whether or not authentic signal (an analog signal) data is written in the record position specified based on public key data, password data, and JISII data in a magnetic stripe of a cash card, and when it was determined that it was written in (Yes), step S208 is shifted to, and when it was not determined that it was not written in (No), step S212 is shifted to.
When step S208 was shifted to, in authentic signal writing section 1c, it is determined whether or not encrypted synchronizing signal (an analog signal) data is written in the record position specified based on public key data, password data, and JISII data in a magnetic stripe of a cash card, and when it was determined that it was written in (Yes), step S210 is shifted to, and when it was determined that it was not written in (No), step S212 is shifted to.

When step S210 was shifted to, in magnetic card determination section 1b, it is determined that the target card is an authentic card, and the process is finished.
On the other hand, when step S212 was shifted to, in magnetic card determination section 1b, it is determined that the target card is a forged card, and the process is finished.
In addition, in step S202, when it was determined that public key data was not written in a predetermined record position and step S210 was shifted to, in magnetic card determination section 1b, it is determined whether or not password data of the inserted cash card owner was acquired, and when it was determined that it was acquired (Yes), step S216 is shifted to, and when it was not so (No), determination process is repeated till it is obtained.

When step S216 was shifted to, in authentic signal writing section 1c, public key data is generated, the generated public key data is written in the predetermined record position, and step S218 is shifted to.
In step S218, in authentic signal writing section 1c, data signal waveform at the record position specified based on public key data, password data, and JISII data is encrypted to generate an authentic signal data, and the generated authentic signal data is written in the same record position as that of a signal before encryption, and step S220 is shifted to.

In step S220, in authentic signal writing section 1c, synchronizing signal data at the record position specified based on public key data, password data, and JISII data is encrypted to change synchronizing signal data before encryption to encrypted synchronizing signal data, and the process is finished.
In the above variation, determination process of writing presence (encryption status) of public key data in magnetic card determination section 1b corresponds to encryption determination means as cited in any one of claims 7, 9 and 10, or public key data writing determination means as cited in claim 12, determination process of writing presence of authentic signal data in authentic signal writing section 1c corresponds to authentic signal writing determination means as cited in any one of claims 7, 8, 12, 13, and 14, generation and writing process of authentic signal data in authentic signal writing section 1c corresponds to authentic signal writing determination means as cited in any one of claims 7, 12, 13, and 17, encryption and writing process of synchronizing signal data in authentic signal writing section 1c corresponds to encryption synchronizing signal writing section as cited in any one of claims 8, 9, 14, 15 and 16, determination process of writing presence of encrypted synchronizing signal data in authentic signal writing section 1c corresponds to encryption synchronizing signal writing determination section as cited in any one of claims 8, 9, 14, and 16,and process of discrimination whether or not a target magnetic card in magnetic card determination section 1b corresponds to forgery determination means as cited in any one of claims 7, 8, 9, 12, and 14.

In addition, in the above variation, an input section (not shown) of password data corresponds to password data acquisition means as cited in any one of claims 12, 13, 14 and 16.
On the other hand, the above variation is configured to encrypt data at the record position specified based on public key data, password data, and approval signal data (for example, JISII data) so as to generate authentic signal data.
However the present invention is not limited to this, it is preferable to be configured to encrypt data at the record position specified based on at least one of public key data, password data, and approval signal data (for example, JISII data) so as to generate authentic signal data. Further, it is preferable to be configured to use at least one of public key data, password data, and approval signal data (for example, JISII data), not limited to specification of the record position of encryption target, to the other process relating encryption such as decision of an amount of variation of an analog waveform.

In the embodiment and the variation, a cash card that approval signal data is JISII data was explained as an example, but, the present invention is not limited to this, can be applied to a magnetic card of the other data type such as a credit card that approval signal data is JISI data.
In the embodiment and the variation, it is determined whether or not the magnetic card is encrypted by determining whether or not the specified data (data for determining encryption) or the public key data is written in the predetermined record position of the magnetic card.
However the present invention is not limited to this, for example, can be applied to the other configuration to determine whether or not the target magnetic card is encrypted by accessing the external server such as an information center and determining whether or not the public key data is registered therein.

### Industrial Applicability

As discussed above, with a forged card discrimination system, an authenticity determination information writing device and a forged card discrimination device according to the present invention, it is possible to write authentic signal data capable of being determined easily whether or not the magnetic card is a forged card in a existing magnetic card such as a cash card and a credit card, and to discriminate simply whether or not the target magnetic card is a forged card based on the authenticity signal data.
Further, since authentic signal data is written in a different region from that of an approval signal data, it is possible to prevent the authentic signal data from being read out and analyzed together with the approval signal data.

In addition since the authentic signal data is generated by encrypting data in a predetermined record position of the magnetic recording medium based on public key data, password data and approval signal data of the owner of the magnetic card, in accompanied with writing public key data in the magnetic card, it is possible to perform higher security encryption.
Further, in addition to encryption and writing of synchronizing signal data written in the magnetic card and to determination of writing presence of authentic signal data, forge discrimination is performed by determination of writing presence of the encrypted synchronizing signal data. Therefore it is possible to determine more surely whether a target magnetic card is a forged card.

## Claims

1. A forged card discrimination system which discriminates whether or not a magnetic card is a forged card, the magnetic card having a magnetic recording medium in which an approval signal data for approving a card is written in a predetermined record position, the forged card discrimination system comprising:
an encryption determination means which determines whether or not the magnetic card is encrypted based on encryption determination data;
an authentic signal writing determination means which determines whether or not an authentic signal data is written in a region except record region of the approval signal data in the magnetic recording medium of the magnetic card, when the encryption determination means determined that the magnetic card was encrypted;
an authentic signal writing means which encrypts the approval signal data when the encryption determination means determined that the magnetic card was not encrypted, and writes the authentic signal data based on the approved signal data encrypted in a region except record region of the approval signal data of the magnetic recording medium; and
a forgery discriminate means which discriminates whether or not the magnetic card is a forged card based on the determination result of the authentic signal writing determination means.

2. The forged card discrimination system according to claim 1,
wherein the authentic signal writing means writes the authentic signal data in at least one of a front part of the record position of a start signal data indicating a start position of the approval signal data and a rear part of the record position of the end signal data indicating an end position of the approval signal data, in a region except the record region of the approval signal data of the magnetic recording medium.

3. An authenticity determination information writing device which writes an authentic signal data for determining authenticity of the magnetic card in the magnetic recording medium of the magnetic card having a magnetic recording medium in which an approval signal data for approving a card is written in a predetermined record position, the authenticity determination information writing device comprising:
an encryption determination means which determines whether or not the magnetic card is encrypted based on encryption determination data; and
an authentic signal writing means which encrypts the approval signal data when the encryption determination means determined that the magnetic card was not encrypted, and writes the authentic signal data based on the approved signal data encrypted in a region except record region of the approval signal data of the magnetic recording medium.

4. The authenticity determination information writing device according to claim 3,
wherein the authentic signal writing means writes the authentic signal data in at least one of a front part of the record position of a start signal data indicating a start position of the approval signal data and a rear part of the record position of the end signal data indicating an end position of the approval signal data, in a region except the record region of the approval signal data of the magnetic recording medium.

5. A forged card discrimination device which discriminates whether or not a magnetic card is a forged card, the magnetic card having a magnetic recording medium in which an approval signal data for approving a card is written in a predetermined record position, the forged card discrimination device comprising:
an encryption determination means which determines whether or not the magnetic card is encrypted based on encryption determination data;
an authentic signal writing determination means which determines whether or not an authentic signal data is written in a region except record region of the approval signal data in the magnetic recording medium of the magnetic card, when the encryption determination means determined that the magnetic card was encrypted; and
a forgery discrimination means which discriminates whether or not the magnetic card is a forged card based on the determination result of the authentic signal writing determination means.

6. The forged card discrimination device according to claim 5,
wherein the authentic signal writing determination means determines whether or not an authentic signal data is written in at least one of a front part of the record position of a start signal data indicating a start position of the approval signal data and a rear part of the record position of the end signal data indicating an end position of the approval signal data, in a region except the record region of the approval signal data of the magnetic recording medium.

7. A forged card discrimination system which discriminates whether or not a magnetic card is a forged card, the magnetic card having a magnetic recording medium in which an approval signal data for approving a card is written in a predetermined record position, the forged card discrimination system comprising:
an encryption determination means which determines whether or not the magnetic card is encrypted based on encryption determination data;
an authentic signal writing determination means which determines whether or not an authentic signal data for determining authenticity of the magnetic card is written in the magnetic recording medium of the magnetic card, when the encryption determination means determined that the magnetic card was encrypted;
an authentic signal writing means which encrypts data written in the magnetic recording medium to generate the authentic signal data based on cipher generation data when the encryption determination means determined that the magnetic card was not encrypted, and writes generated authentic signal data in the magnetic recording medium; and
a forgery discrimination means which discriminates whether or not the magnetic card is a forged card based on the determination result of the authentic signal writing determination means.

8. The forged card discrimination system according to claim 7, further comprising:
an encryption synchronizing signal writing means which encrypts a synchronizing signal data written in the magnetic recording medium based on the cipher generation data and writes encrypted synchronizing signal data in the magnetic recording medium; and
an encryption synchronizing signal writing determination means which determines whether or not the encrypted synchronizing signal data is written in the magnetic recording medium based on the cipher generation data, when the authentic signal writing determination means determined that the authentic signal data was written in,
the forgery discrimination means discriminates whether or not the magnetic card is a forged card based on determination result from the authentic signal writing determination means and determination result from the encryption synchronizing signal writing determination means.

9. A forged card discrimination system which discriminates whether or not a magnetic card is a forged card, the magnetic card having a magnetic recording medium in which an approval signal data for approving a card is written in a predetermined record position, the forged card discrimination system comprising:
an encryption determination means which determines whether or not the magnetic card is encrypted based on encryption determination data;
an encryption synchronizing signal writing means which encrypts a synchronizing signal data written in the magnetic recording medium based on the cipher generation data and writes encrypted synchronizing signal data in the magnetic recording medium;
an encryption synchronizing signal writing determination means which determines whether or not encrypted synchronizing signal data is written in the magnetic recording medium based on the cipher generation data when the encryption determination means determined that the magnetic card was encrypted; and
a forgery discrimination means which discriminates whether or not the magnetic card is a forged card based on determination result from the encryption synchronizing signal writing determination means.

10. The forged card discrimination system according to any one of claims 7 to 9,
wherein the encryption determination data is a public key data set for every magnetic card, and
the encryption determination means determines that a magnetic card, in which the public key data is set, is encrypted when public key data is set.

11. The forged card discrimination system according to any one of claims 7 to 10,
wherein the cipher generation data includes at least one of the approval signal data, the public key data, and the password data.

12. A forged card discrimination system which discriminates whether or not a magnetic card is a forged card, the magnetic card having a magnetic recording medium in which an approval signal data for approving a card is written in a predetermined record position, the forged card discrimination system comprising:
a public key data writing determination means which determines whether or not a public key data is written in the magnetic recording medium of the magnetic card;
a password data acquisition means which acquires a password data;
an authentic signal writing determination means which determines whether or not an authentic signal data for determining authenticity of the magnetic card is written in the magnetic recording medium of the magnetic card, based on written public key data and password data acquired by the password data acquisition means, when the public key data writing determination means determined that the public key data was written in;
a public key data writing means which generates public key data and writes generated public key data in the magnetic recording medium when the public key data writing determination means determined that the public key data was not written;
an authentic signal writing means which encrypts data written in the magnetic recording medium to generate the authentic signal data based on public key data generated by the public key data writing means and password data acquired by the password data acquisition means, and writes generated authentic signal data in the magnetic recording medium; and
a forgery discrimination means which discriminates whether or not the magnetic card is a forged card based on the determination result of the authentic signal writing determination means.

13. The forged card discrimination system according to claim 12,
wherein the authentic signal writing means encrypts data written in the magnetic recording medium based on the public key data generated by the public key data writing means, the password data acquired by the password data acquisition means, and the approval signal data written in the magnetic recording medium.

14. The forged card discrimination system according to claim 12 or 13, further comprising:
an encryption synchronizing signal writing means which encrypts a synchronizing signal data written in the magnetic recording medium based on the public key data generated by the public key data writing means and the password data acquired by the password data acquisition means; and
an encryption synchronizing signal writing determination means which determines whether or not the encrypted synchronizing signal data is written in the magnetic recording medium based on the public key data generated by the public key data writing means and the password data acquired by the password data acquisition means, when the authentic signal writing determination means determined that the authentic signal data was written,
the forgery discrimination means discriminates whether or not the magnetic card is a forged card based on determination result from the authentic signal writing determination means and determination result from the encryption synchronizing signal writing determination means.

15. The forged card discrimination system according to claim 14,
wherein the encryption synchronizing signal writing means encrypts the synchronizing signal data by changing a width of waveform of the synchronizing signal data written in the magnetic recording medium.

16. The forged card discrimination system according to claim 14 or 15,
wherein the encryption synchronizing signal writing means encrypts the synchronizing signal data in the magnetic recording medium based on public key data generated by the public key data writing means, the password data acquired by the password acquisition means, and the approval signal data written in the magnetic recording medium, and
the encryption synchronizing signal writing determination means determines writing presence of the encrypted synchronizing signal based on the public key data generated by the public key data writing means, the password data acquired by the password acquisition means, and the approval signal data written in the magnetic recording medium.

17. The forged card discrimination system according to any one of claims 7 to 16,
wherein the authentic signal writing means writes the authentic signal data in at least one of a front part of the record position of a start signal data indicating a start position of the approval signal data and a rear part of the record position of an end signal data indicating an end position of the approval signal data, in a region except the record region of the approval signal data of the magnetic recording medium.
